# EUROPÄISCHE PATENTANMELDUNG

(11) **EP 0 857 560 A1**
(43) Veröffentlichungstag der Anmeldung: **12.08.1998**
(21) Anmeldenummer: 97107226.9
(22) Anmeldetag: 30.04.1997
(51) Int. Cl.: B29C 47/88

(54) **Verfahren und Vorrichtung zur Kühlung extrudierter Hohlprofile**

(30) Priorität: 05.02.1997 DE 19704363
(71) Anmelder: Linde Aktiengesellschaft, 65189 Wiesbaden (DE)
(72) Erfinder: Praller, Andreas, Dipl.-Ing., 82515 Wolfratshausen (DE)
(74) Vertreter: Kasseckert, Rainer

(57) **Zusammenfassung**

Die Erfindung betrifft ein Verfahren und eine Vorrichtung zur Kühlung von extrudierten Hohlprofilen (8), insbesondere Rohren, aus Kunststoff. Durch den Extruderkopf (5) wird flüssiges oder überkritisches Kohlendioxid in das Innere des Kunststoffhohlprofils (8) geleitet und in mindestens einer Entspannungsdüse (10) entspannt, wobei gasförmiges und festes Kohlendioxid entsteht. Das gasförmige Kohlendioxid wird auf die Innenwand des Hohlprofils (8) gelenkt, während der Kohlendioxidschnee von der Innenwand des Hohlprofils (8) zurückgehalten und/oder in den gasförmigen Zustand überführt wird.

## Beschreibung

Die Erfindung betrifft ein Verfahren zur Kühlung von extrudierten Hohlprofilen, insbesondere Rohren, aus Kunststoff, wobei flüssiges oder überkritisches Kohlendioxid durch den Extruderkopf geleitet, entspannt und das Innere des Kunststoffhohlprofils mit dem entstehenden, gasförmigen Kohlendioxid gekühlt wird. Ferner bezieht sich die Erfindung auf eine Vorrichtung zur Kühlung von extrudierten Hohlprofilen aus Kunststoff mit mindestens einer Zuleitung für flüssiges oder überkritisches Kohlendioxid, welche durch den Extruderkopf in das Innere des Hohlprofils verläuft, und welche mindestens eine Entspannungsdüse aufweist.

Bei der Extrusion von Kunststoffrohren wird häufig nur die Außenseite der extrudierten Rohre mit Wasser gekühlt. Die Abkühlung erfolgt dabei in einer nachgeschalteten Kalibrier- und Kühlstrecke. Diese Art der Kühlung führt insbesondere bei dickwandigen Rohren zu einem nur langsamen Wärmeaustausch. Die Ausstoßleistung solcher Kunststoffextrusionsanlagen wird daher im wesentlichen durch die Abkühlgeschwindigkeit des Kunststoffes sowie der Kalibrierform begrenzt. Eine Verlängerung der Kühlstrecke zur Erhöhung der Ausstoßleistung ist sehr teuer und nur begrenzt möglich.

In der DE-OS 24 56 386 wird daher ein Verfahren vorgeschlagen, bei dem in das Innere des Kunststoffrohres im Bereich der Kalibrierform ein dort verdampfendes oder sublimierendes tiefkaltes Medium, insbesondere flüssiger Stickstoff, eingedüst wird. Ebenso ist aus der DE-OS 23 24 133 ein Verfahren zum Außenkalibrieren von extrudierten Hohlprofilen aus thermoplastischen Kunststoff bekannt, bei dem zur Kühlung ein chemisch inertes Flüssiggas mit einer kritischen Temperatur zwischen -150 und +35°C, wie z.B. Stickstoff oder Kohlendioxid, im Hohlraum des Hohlprofils verdampft wird.

Bei der Verwendung von tiefkaltem Stickstoff zur Innenkühlung ist darauf zu achten, daß nur gasförmiger Stickstoff mit dem Kunststoffrohr in Kontakt gelangt, da flüssiger Stickstoff auf der Rohrinnenwand Beschädigungen herbeiführen kann. Bei längerem Betrieb bzw. bei hohem Stickstoffdurchsatz besteht allerdings die Gefahr, daß sich die Stickstoffzuleitungen stark abkühlen, wodurch eine restlose Verdampfung des Stickstoff nicht mehr gewährleistet ist.

In der DE-C-33 15 202 wird daher eine Vorrichtung vorgeschlagen, bei der die Austrittsdüse für den flüssigen Stickstoff von einem Verdampferglied umgeben ist, welches in Wärmekontakt mit dem heißen, extrudierten Kunststoffrohr steht. Der flüssige Stickstoff wird aus der Düse auf das Verdampferglied gesprüht, verdampft dort und wird anschließend über Austrittsöffnungen in dem Verdampferglied der inneren Oberfläche des Kunststoffrohres zugeführt.

Nach der Extrusion fließt die noch weiche Kunststoffschmelze aufgrund der Schwerkraft nach unten, so daß sich eine ungleichmäßige Wanddickenverteilung über dem Umfang des Kunststoffrohres ergibt. Diese Verformung des Rohres bzw. des Hohlprofils wird durch eine Innenkühlung wirksam verhindert. Bei der Verwendung von flüssigem Stickstoff kann im Vergleich zur Kühlung mit Wasser zudem die Extrusionsgeschwindigkeit erhöht werden.

Bei der Durchführung des flüssigen Stickstoffs durch den heißen Extruderkopf tritt ein großer Temperaturunterschied zwischen dem flüssigem Stickstoff, der eine Temperatur von -196°C besitzt, und dem Extruderkopf, der eine Temperatur von etwa 200°C besitzt, auf. Dies erfordert einen hohen Isolationsaufwand, der jedoch ein pulsierendes Austreten des Stickstoffs aus der Kühldüse, welches zur Tröpfchenbildung auf dem Kunststoffrohr führt, nicht verhindern kann.

Aufgabe vorliegender Erfindung ist es daher, ein Verfahren der eingangs genannten Art aufzuzeigen, welches die Nachteile der bekannten Verfahren vermeidet. Insbesondere soll durch die Erfindung erreicht werden, daß das Kühlmedium so verteilt wird, daß ein möglichst gleichmäßiger und guter Wärmeübergang zwischen dem Kühlmedium und der Innenwand des Hohlprofils erzielt wird. Die Gefahr der Beschädigung des Hohlprofils durch tiefkaltes, flüssiges Kühlmedium soll beseitigt, die Extrusionsgeschwindigkeit erhöht, und der technische Aufwand, insbesondere der Isolieraufwand, bei der Realisierung dieses Verfahrens minimiert werden. Ebenso soll eine Vorrichtung zur Durchführung dieses Verfahrens geschaffen werden.

Verfahrensseitig wird diese Aufgabe dadurch gelöst, daß das durch den Extruderkopf geleitete, flüssige oder überkritische Kohlendioxid in dem extrudierten Hohlprofil verteilt und anschließend entspannt wird, und das bei der Entspannung des flüssigen oder überkritischen Kohlendioxids entstehende, gasförmige Kohlendioxid auf die Innenwand des Hohlprofils geleitet wird, während das bei der Entspannung des flüssigen oder überkritischen Kohlendioxids entstehende, feste Kohlendioxid in den gasförmigen Zustand überführt und/oder von der Innenwand des Hohlprofils ferngehalten wird.

Erfindungsgemäß wird Kohlendioxid als Kühlmedium verwendet, welches in der Regel unter Druck flüssig in einem Versorgungstank gespeichert wird. Das flüssige Kohlendioxid wird durch den Extruderkopf hindurch in das Innere des extrudierten Hohlprofiles geleitet und dort in einer oder mehreren Kühldüsen entspannt. Bei der Entspannung des flüssigen bzw. überkritischen Kohlendioxids entsteht ein Kühlstrahl mit hoher Strömungsgeschwindigkeit, welcher aus Kohlendioxidgas und Kohlendioxidschnee besteht. Die im Kühlstrahl enthaltenen, festen Bestandteile werden erfindungsgemäß zurückgehalten und/oder verdampft, so daß sie mit der Oberfläche des Kunststoffhohlprofiles nicht in Kontakt kommen. Dadurch wird eine Beschädigung der Oberfläche des Hohlprofiles ausgeschlossen.

Die Innenkühlung mit Kohlendioxid anstatt flüssigem Stickstoff ist bei den bei der Kunststoffextrusion vorliegenden Bedingungen, insbesondere der hohen Temperatur des Extruderkopfes, wesentlich leichter zu handhaben, da der Isolieraufwand bei der Durchführung der Kohlendioxidzuleitung durch den Extruderkopf minimiert werden kann.

Vorzugsweise wird das flüssige oder überkritische Kohlendioxid auf mehrere mit dem extrudierten Hohlprofil rotationssymmetrisch angeordnete Düsen oder eine koaxial mit dem Hohlprofil angeordnete, ringförmige Düse verteilt wird. Durch diese Verteilung des Kohlendioxids wird eine gleichmäßige Kühlwirkung über dem gesamten Umfang des Hohlprofils erreicht. Ungleichmäßige Wanddicken oder eine Verformung des Hohlprofils werden so vermieden.

Bei der Expansion des flüssigen oder überkritischen Kohlendioxids entsteht ein aus Kohlendioxidschnee und Kohlendioxidgas bestehender Kühlmittelstrahl. Vorteilhaft wird dieser Kühlmittelstrahl, d.h. das entspannte Kohlendioxid, auf einen Umlenkkörper geleitet. Auf diesem Umlenkkörper lagert sich der Kohlendioxidschnee ab, während das Kohlendioxidgas direkt oder indirekt in Richtung der Innenwand des Hohlprofils weitergeleitet wird. Auf diese Weise wird eine wirksame Trennung von Kohlendioxidschnee und Kohlendioxidgas erzielt. Beschädigungen der Innenwand des Hohlprofils durch Flüssigkeitströpfchen, Trockeneispartikel oder Kohlendioxidschnee sind somit ausgeschlossen.

Von Vorteil wird das gasförmige Kohlendioxid nicht nur auf die Innenwand des Hohlprofils geleitet, sondern auch entlang der Innenwand des Hohlprofils geführt. Auf diese Weise wird der Wärmeübergang zwischen der Innenwand des Hohlprofils und dem Kohlendioxid intensiviert, und die Kühleigenschaften des Kohlendioxids werden weitestgehend ausgenutzt.

In einer bevorzugten Variante wird dem gasförmigen Kohlendioxid eine Drallströmung, d.h. eine Rotationsbewegungskomponente, aufgezwungen. Durch einen wendel- oder schraubenförmigen Strömungsverlauf wird eine noch bessere Verteilung des Kohlendioxids über dem Umfang erreicht. Ein Absinken des Kohlendioxids aufgrund der Schwerkraft und ein damit verbundenes ungleichmäßiges Abkühlen des Hohlprofils wird vermieden.

Bei der Innenkühlung mit tiefkalten Kühlmedien wirft die Durchführung des kalten Kühlmediums durch den heißen Extruderkopf technische Probleme hinsichtlich der Isolierung auf. Zur Vermeidung dieser Isolationsprobleme wird das flüssige Kohlendioxid bevorzugt mit Umgebungstemperatur durch den Extruderkopf geleitet. Die Anforderungen an die Isolation der Kohlendioxiddurchführung durch den Extruderkopf sind daher wesentlich geringer. Je nach den Verfahrensbedingungen, insbesondere der Temperatur des Extruderkopfes und des Kohlendioxiddurchsatzes, ist es sogar möglich, auf eine Isolierung ganz zu verzichten.

Vorzugsweise wird das extrudierte Hohlprofil innen und außen gekühlt. Die Außenkühlung erfolgt herkömmlich mit Wasser, kann jedoch auch mit Luft oder tiefkalten Gasen wie Stickstoff oder Kohlendioxid durchgeführt werden. Ist eine Wasserkühlung nicht ausreichend, so wird bevorzugt auch außen mit Kohlendioxid gekühlt. Durch eine Kombination der erfindungsgemäßen Innenkühlung mit einer Außenkühlung wird das Extrusionsverfahren sowohl in quantitativer als auch in qualitativer Hinsicht verbessert. Einerseits wird das Hohlprofil schneller abgekühlt, wodurch die Extrusionsgeschwindigkeit gesteigert werden kann, andererseits wird das Profil gleichmäßiger abgekühlt, wodurch das Auftreten von Spannungen in dem Profil verhindert wird.

Neben dem Verfahren zieht sich die Erfindung auch auf eine Vorrichtung zur Kühlung von extrudierten Hohlprofilen, insbesondere Rohren, aus Kunststoff mit mindestens einer Zuleitung für flüssiges oder überkritisches Kohlendioxid, welche durch den Extruderkopf in das Innere des Hohlprofils verläuft, und welche mindestens eine Entspannungsdüse aufweist.

Erfindungsgemäß befindet sich gegenüber der Entspannungsdüse mindestens ein Umlenkkörper, der ein Umlenken des bei der Entspannung des flüssigen oder überkritischen Kohlendioxids entstehenden, gasförmigen Kohlendioxids in Richtung der Innenwand des Hohlprofils bewirkt.

Unter einer Entspannungsdüse wird in diesem Zusammenhang jede Vorrichtung verstanden, die eine Entspannung des flüssigen Kohlendioxids ermöglicht. Hierzu gehören ebenso speziell ausgebildete Düsen wie auch einfache Rohre bzw. Rohrenden.

Zweckmäßigerweise sind zur Expansion des flüssigen oder überkritischen Kohlendioxids mehrere mit dem extrudierten Hohlprofil rotationssymmetrisch angeordnete Düsen oder eine koaxial mit dem Hohlprofil angeordnete, ringförmige Düse vorgesehen. Diese Anordnung ermöglicht eine gleichmäßige Verteilung des Kohlendioxids über den Umfang des Hohlprofils und damit eine gleichmäßige Kühlung des Hohlprofils.

Der gegenüber der oder den Entspannungsdüsen angeordnete Umlenkkörper ist bevorzugt als Kegel oder Kegelstumpf ausgebildet. Tritt das Kohlendioxid in axialer Richtung, d.h. in oder entgegen der Extrusionsrichtung, aus den Entspannungsdüsen aus, so wird beim Auftreffen des Kohlendioxids auf den Kegel oder den Kegelstumpf das Kohlendioxidgas in Richtung der Innenwand des Hohlprofils abgelenkt, während der Kohlendioxidschnee auf dem Kegel oder Kegelstumpf zurückgehalten wird. Durch diese Ausgestaltung wird gewährleistet, daß das extrudierte Hohlprofil nur mit gasförmigem Kohlendioxid gekühlt wird.

Die erfindungsgemäße Vorrichtung weist zweckmäßigerweise neben dem Umlenkkörper einen weiteren Umlenkring auf, der koaxial mit dem Hohlprofil angeordnet ist. Der Umlenkring ist so angeordnet, daß das aus der Entspannungsdüse ausgetretene, gasförmige Kohlendioxid, welches durch den Umlenkkörper auf die Innenwand gelenkt wird, entlang der Innenwand des Hohlprofils geführt wird.

Es hat sich als günstig erwiesen, in dem extrudierten Hohlprofil ein Leitrohr vorzusehen, welches mit dem Hohlprofil einen Strömungskanal für das gasförmige Kohlendioxid bildet. Das Leitrohr dient dazu, einen möglichst guten Wärmeübergang zwischen dem Kohlendioxid und dem extrudierten Hohlprofil zu erzielen. Durch das Leitrohr wird eine hohe Strömungsgeschwindigkeit im Spalt zwischen Leitrohr und extrudiertem Hohlprofil erzeugt, welche einen großen Wärmeübergangskoeffizienten ermöglicht. Ferner wird durch das Leitrohr verhindert, daß das Kohlendioxid durch die Rohrmitte abströmt, ohne dem extrudierten Hohlprofil genügend Wärme zu entziehen.

Zur Erzielung optimaler Wärmeübergangsbedingungen sollte die Länge des Leitrohres nicht zu kurz gewählt werden. Vorteilhaft besitzt das Leitrohr eine Länge zwischen 0,5 m und 3 m. Auf diese Weise wird die Kühlwirkung des Kohlendioxids nahezu optimal ausgenutzt. Die Bildung längerer Strömungskanäle ist nur aufwendig zur realisieren und führt zu technischen Problemen, insbesondere beim Anfahren der Extrusionsanlage.

Zur Erzeugung einer Drallströmung des gasförmigen Kohlendioxids ist es günstig, Leitbleche vorzusehen. Besonders vorteilhaft sind diese an der Außenseite des Leitrohres angeordnet. Ein oder mehrere Leitbleche oder andere Vorrichtungen, welche dem Kohlendioxid eine kreisförmige Bewegungskomponente aufzwingen, haben eine noch bessere Verteilung der Kühlströmung zur Folge.

Die Breite des Strömungskanals zwischen dem Leitrohr und dem Hohlprofil hängt von den Verfahrensbedingungen ab und ist in Abhängigkeit von der Temperatur und der Dicke des extrudierten Hohlprofils sowie des erforderlichen Kohlendioxiddurchsatzes zu wählen. Als günstig haben sich in diesem Zusammenhang Spaltdicken zwischen 10 mm und 50 mm herausgestellt.

Durch die Erfindung werden wesentliche Vorteile gegenüber dem Stand der Technik erzielt. Durch die vorgeschlagene Kühlung mit Kohlendioxid werden die Wanddickenverteilung, die Rundheit bzw. allgemein die Geometrie des extrudierten Hohlprofils verbessert. Es wird eine sehr effiziente Kühlung erreicht, die eine Erhöhung der Extrusionsgeschwindigkeit und damit der Ausschußmenge einer Extrusionslinie ermöglicht. Die Abkühlung des Hohlprofils erfolgt sehr gleichmäßig wodurch, insbesondere wenn von innen und außen gekühlt wird, geringere Spannungen in dem Hohlprofil auftreten. Im Vergleich zu den herkömmlichen Kühlverfahren mit flüssigem Stickstoff bereitet die erfindungsgemäße Kühlung keinerlei Probleme bei der Isolation der Kühlmediumdurchführung durch den Extruderkopf. Die Erfindung eignet sich für die Kühlung aller extrudierbaren Kunststoffe, bspw. PVC, PE oder PP. Besonders günstig ist der Einsatz der Erfindung bei der Extrusion von Kunststoffprofilen oder Kunststoffrohren mit großen Abmessungen und großen Wandstärken.

Die Erfindung sowie weitere Einzelheiten der Erfindung werden im folgenden anhand von in den schematischen Zeichnungen dargestellten Ausführungsbeispielen näher erläutert.

Es zeigen im einzelnen
Figur 1 das Grundprinzip der erfindungsgemäßen Innenkühlung mit Kohlendioxid,
Figur 2 eine detailliertere Darstellung der erfindungsgemäßen Kühlvorrichtung,
Figur 3 eine alternative Ausgestaltungsform der Kühlvorrichtung.

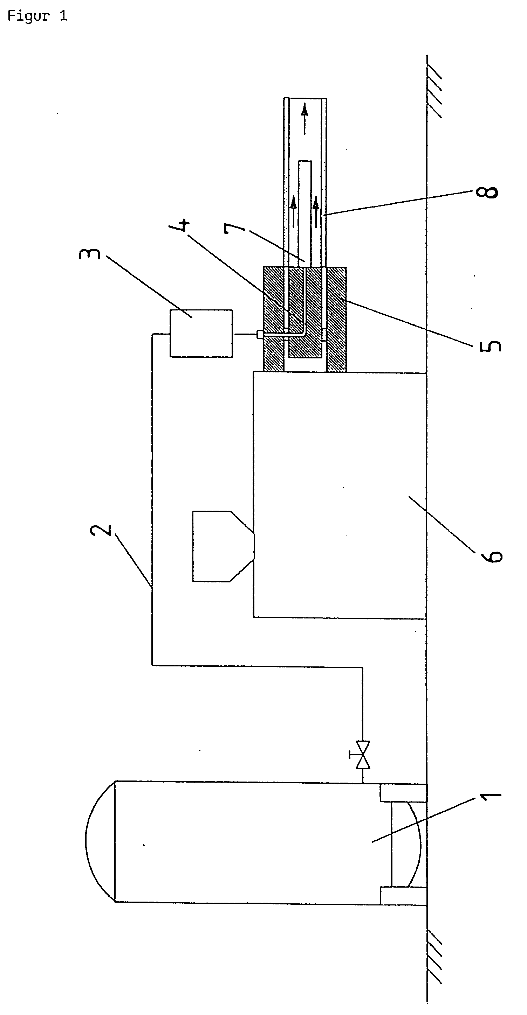

In Figur 1 ist schematisch das Grundprinzip der Innenkühlung von extrudierten Rohren gezeigt. Als Kühlmedium wird Kohlendioxid verwendet, das unter Druck flüssig in einem Versorgungstank 1 gespeichert wird. Über eine Zuleitung 2 und eine Dosiertafel 3 wird das flüssige Kohlendioxid zum Extruderkopf 5 geleitet. Das Kohlendioxid, welches Umgebungstemperatur von etwa 20°C besitzt, wird mittels eines Edelstahlrohres 4 durch den Extruderkopf 5 der Kühlvorrichtung 7 zugeführt. Mittels dieser Kühlvorrichtung 7 wird ein von dem Extruder 6 durch den Extruderkopf 5 extrudiertes Kunststoffrohr 8 von innen gekühlt.

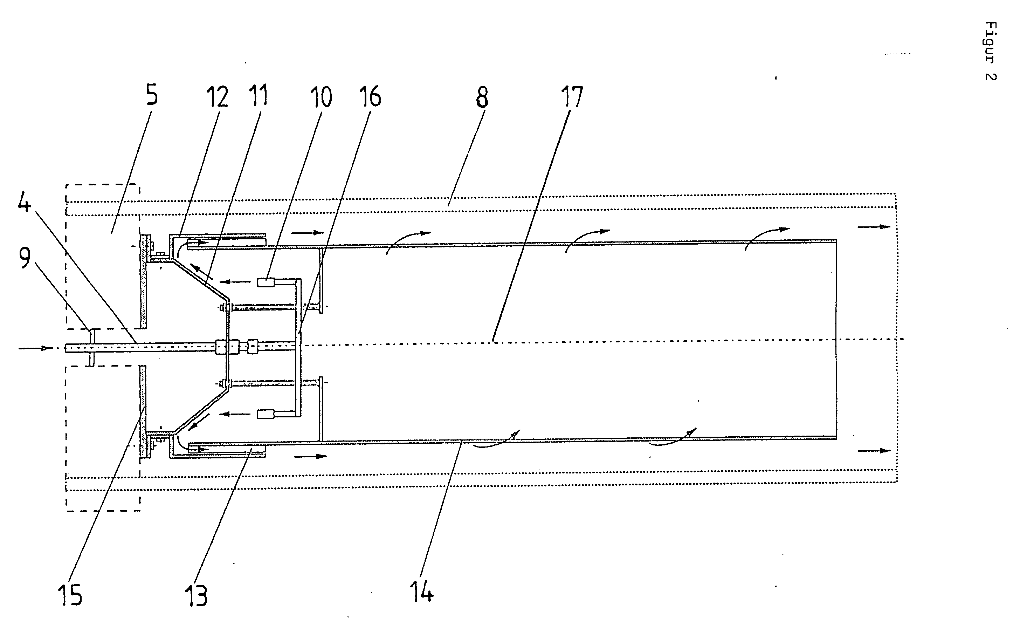

In Figur 2 ist die Kühlvorrichtung 7 im Detail dargestellt. Das Edelstahlrohr 4 ist durch Abstandsringe 9 gegen den Extruderkopf 5 isoliert. Dieser Abstandsringe 9 bestehen aus einem temperaturbeständigen Isoliermaterial, z.B. Teflon, und verhindern einen direkten Kontakt des Kohlendioxids mit dem Extruderkopf 5 und damit eine zu starke Abkühlung des Extruderkopfes 5. Das Edelstahlrohr 4 endet in einem Verteilerstück 16, welches mehrere rotationssymmetrisch um die Achse 17 angeordnete Kühldüsen 10 aufweist. Im Verteilerstück 16 wird das flüssige Kohlendioxid gleichmäßig auf die Kühldüsen 10 verteilt, um eine gute Umfangsverteilung des Kohlendioxids zu erzielen. In den Kühldüsen 10 expandiert das flüssige bzw. überkritische Kohlendioxid, wobei ein Kühlstrahl mit hoher Strömungsgeschwindigkeit entsteht. Der Kühlstrahl besteht aus einem Gemisch von Kohlendioxidschnee und Kohlendioxidgas.

Die Kühldüsen 10 sind mit ihren Austrittsöffnungen entgegen der Extrusionsrichtung angeordnet, so daß bei der Entspannung des flüssigen oder überkritischen Kohlendioxids warmes Kohlendioxidgas von der dem Extruderkopf 5 abgewandten Seite angesaugt wird. Dies hat den Vorteil, daß bei der Entspannung aufgrund der Vermischung mit dem angesaugten, warmen Gas hauptsächlich Kohlendioxid im gasförmigen Zustand und nur zu einem sehr kleinen Teil Kohlendioxid im festen Zustand entsteht.

Damit die dennoch in geringem Umfang in dem Kühlmittelstrahl enthaltenen Trockeneispartikel und Kohlendioxidschneepartikel nicht direkt mit der Rohroberfläche 8 in Berührung kommen, wird der Kühlmittelstrahl der einzelnen Kühldüsen 10 umgelenkt. Hierzu sind die Kühldüsen 10 auf einen Kegelstumpf 11 gerichtet, auf den der Kühlstrahl jeder Kühldüse 10 auftrifft. Der austretende Kohlendioxidschnee sammelt sich auf der Oberfläche des Kegelstumpfes 11, von welchem er vom Kohlendioxidgas fein verteilt mitgerissen wird und/oder sublimiert.

Der Kegelstumpf 11 ist unter Zwischenschaltung einer Isolierplatte 15 an dem Extruderkopf 5 befestigt, so daß der Kegelstumpf 11 und der Extruderkopf 5 thermisch getrennt sind, um eine zu starke Abkühlung des Extruderkopfes 5 zu vermeiden. Der Kühlstrom aus Kohlendioxidgas wird durch einen Umlenkring 12 so abgelenkt, daß er entlang der Innenwand des extrudierten Rohres 8 strömt.

Das Strömungsleitrohr 14, welches eine Länge von 2m besitzt, dient dazu, einen möglichst guten Kontakt zwischen dem Kohlendioxid und der Innenwand des extrudierten Rohres 8 zu erreichen. Durch das Leitrohr 14 wird eine hohe Strömungsgeschwindigkeit im Spalt zwischen dem Leitrohr 14 und dem extrudierten Rohr 8 erzeugt, die einen großen Wärmeübergangskoeffizienten ermöglicht. Das Leitrohr 14 weist an seinem dem Extruderkopf 5 zugewandten Ende Leitbleche 13 auf, die eine Drallströmung des Kohlendioxids erzeugen. Die Drallströmung verhindert ein Absinken des Kohlendioxids aufgrund der Schwerkraft nach unten und gewährleistet eine gleichmäßige Verteilung des Kohlendioxids in dem Rohr 8.

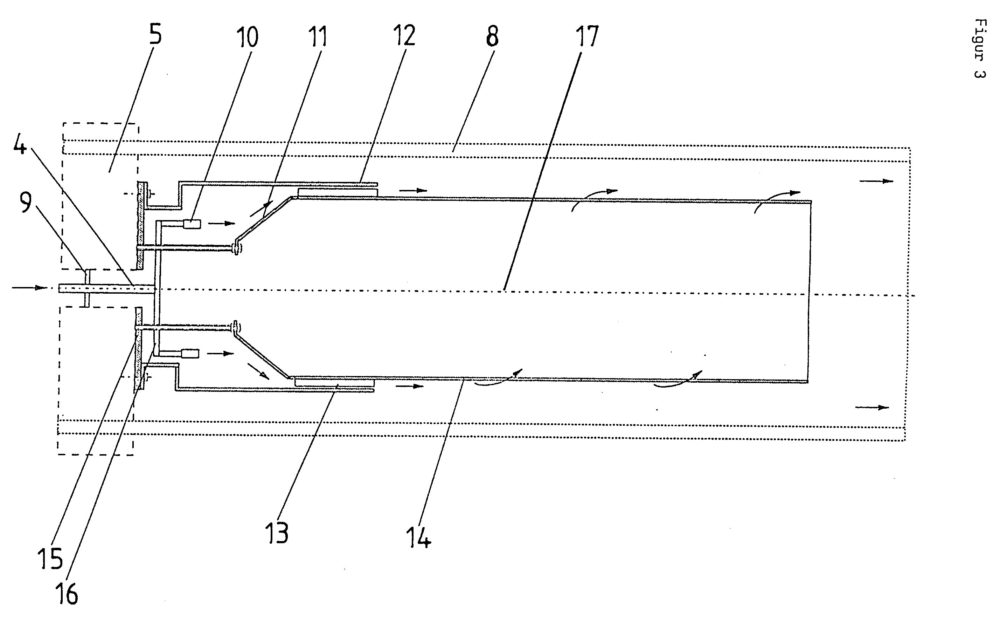

In Figur 3 ist beispielhaft eine weitere Ausführungsform der Kühlvorrichtung 7 dargestellt. Die Zuleitung 4 für das flüssige Kohlendioxid endet wiederum in einem Verteilerstück 16, welches eine Vielzahl von rotationssymmetrisch um die Achse 17 angeordneten Kühldüsen 10 aufweist. Anstelle der Kühldüsen 10 ist es auch von Vorteil, eine axialsymmetrisch mit der Achse 17 angeordnete Ringdüse zu verwenden.

Die in Figur 3 dargestellte Kühlvorrichtung unterscheidet sich von der in Figur 2 gezeigten Kühlvorrichtung im wesentlichen dadurch, daß die Austrittsrichtung des Kohlendioxids aus den Entspannungsdüsen in Extrusionsrichtung des Rohres 8 verläuft, und nicht entgegen der Extrusionsrichtung. Die übrigen mit Bezugszeichen versehenen Bestandteile der in Figur 3 dargestellten Kühlvorrichtung entsprechen den in Figur 2 gezeigten Teilen.

Außer den beiden gezeigten Ausführungsformen der Kühlvorrichtung sind noch zahlreiche weitere Varianten möglich. Beispielsweise kann es vorteilhaft sein, die Kühldüsen und/oder den Umlenkkörper und/oder den Umlenkring so anzuordnen, daß das Kohlendioxid entgegen der Extrusionsrichtung entlang der Innenwand des Hohlprofiles strömt, wodurch eine schwächere Kühlung erzielt wird. Dies kann bei Hohlprofilen, bei denen bei sehr schneller Abkühlung Spannungen auftreten, günstig sein. Besteht diese Gefahr nicht, so ist es andererseits vorteilhaft, mehrere der erfindungsgemäßen Kühlvorrichtungen in Extrusionsrichtung hintereinander anzuordnen. Das in das Innere des Hohlprofiles geleitete Kohlendioxid wird also auf eine Vielzahl axial, radial und/oder azimutal angeordneter Kühldüsen verteilt.

## Patentansprüche

1. Verfahren zur Kühlung von extrudierten Hohlprofilen, insbesondere Rohren, aus Kunststoff, wobei flüssiges oder überkritisches Kohlendioxid durch den Extruderkopf geleitet, entspannt und das Innere des Kunststoffhohlprofils mit dem entstehenden, gasförmigen Kohlendioxid gekühlt wird, **dadurch gekennzeichnet**, daß das durch den Extruderkopf (5) geleitete, flüssige oder überkritische Kohlendioxid in dem extrudierten Hohlprofil (8) verteilt und anschließend entspannt wird, und das bei der Entspannung des flüssigen oder überkritischen Kohlendioxids entstehende, gasförmige Kohlendioxid auf die Innenwand des Hohlprofils (8) geleitet wird, während das bei der Entspannung des flüssigen oder überkritischen Kohlendioxids entstehende, feste Kohlendioxid in den gasförmigen Zustand überführt und/oder von der Innenwand des Hohlprofils (8) ferngehalten wird.

2. Verfahren nach Anspruch 1, dadurch gekennzeichnet, daß das flüssige oder überkritische Kohlendioxid auf mehrere mit dem extrudierten Hohlprofil (8) rotationssymmetrisch angeordnete Düsen (10) oder eine koaxial mit dem Hohlprofil (8) angeordnete, ringförmige Düse verteilt wird.

3. Verfahren nach einem der Ansprüche 1 oder 2, dadurch gekennzeichnet, daß das entspannte Kohlendioxid auf einen Umlenkkörper (11) geleitet wird.

4. Verfahren nach einem der Ansprüche 1 bis 3, dadurch gekennzeichnet, daß das gasförmige Kohlendioxid entlang der Innenwand des Hohlprofils (8) geführt wird.

5. Verfahren nach einem der Ansprüche 1 bis 4, dadurch gekennzeichnet, daß dem gasförmigen Kohlendioxid eine Drallströmung aufgezwungen wird.

6. Verfahren nach einem der Ansprüche 1 bis 5, dadurch gekennzeichnet, daß flüssiges Kohlendioxid mit Umgebungstemperatur durch den Extruderkopf (5) geleitet wird.

7. Verfahren nach einem der Ansprüche 1 bis 6, dadurch gekennzeichnet, daß das Hohlprofil (8) innen und außen gekühlt wird.

8. Verfahren nach einem der Ansprüche 1 bis 7, dadurch gekennzeichnet, daß das flüssige oder überkritische Kohlendioxid so entspannt wird, daß es eine Bewegungskomponente entgegen der Extrusionsrichtung aufweist.

9. Vorrichtung zur Kühlung von extrudierten Hohlprofilen, insbesondere Rohren, aus Kunststoff mit mindestens einer Zuleitung für flüssiges oder überkritisches Kohlendioxid, welche durch den Extruderkopf in das Innere des Hohlprofils verläuft, und welche mindestens eine Entspannungsdüse aufweist, **dadurch gekennzeichnet**, daß sich gegenüber der Entspannungsdüse (10) mindestens ein Umlenkkörper (11) befindet, der ein Umlenken des bei der Entspannung des flüssigen oder überkritischen Kohlendioxids entstehenden, gasförmigen Kohlendioxids in Richtung der Innenwand des Hohlprofils (8) bewirkt.

10. Vorrichtung nach Anspruch 9, dadurch gekennzeichnet, daß mehrere mit dem extrudierten Hohlprofil (8) rotationssymmetrisch angeordnete Düsen (10) oder eine koaxial mit dem Hohlprofil (8) angeordnete, ringförmige Düse vorgesehen sind.

11. Vorrichtung nach einem der Ansprüche 9 oder 10, dadurch gekennzeichnet, daß der Umlenkkörper (11) als Kegel oder Kegelstumpf ausgebildet ist.

12. Vorrichtung nach einem der Ansprüche 9 bis 11, dadurch gekennzeichnet, daß ein koaxial mit dem Hohlprofil (8) angeordneter Umlenkring (12) vorgesehen ist, der in Kombination mit dem Umlenkkörper (11) ein Umlenken des aus der Entspannungsdüse (10) austretenden, gasförmigen Kohlendioxids entlang der Innenwand des Hohlprofils (8) bewirkt.

13. Vorrichtung nach einem der Ansprüche 9 bis 12, dadurch gekennzeichnet, daß ein Leitrohr (14) vorgesehen ist, welches mit dem Hohlprofil (8) einen Strömungskanal für das gasförmige Kohlendioxid bildet.

14. Vorrichtung nach Anspruch 13, dadurch gekennzeichnet, daß das Leitrohr (14) zwischen 0,5 m und 3 m lang ist.

15. Vorrichtung nach einem der Ansprüche 9 bis 14, dadurch gekennzeichnet, daß Leitbleche (13) vorgesehen sind, die eine Drallströmung des gasförmigen Kohlendioxids bewirken.

16. Vorrichtung nach einem der Ansprüche 9 bis 15, dadurch gekennzeichnet, daß die Austrittsöffnung der Entspannungsdüse (10) entgegen der Extrusionsrichtung gerichtet ist.
